# EUROPEAN PATENT APPLICATION

(11) **EP 3 712 233 A1**
(43) Date of publication of application: **23.09.2020**
(21) Application number: 19164040.8
(22) Date of filing: 20.03.2019
(51) Int. Cl.: C10L 5/36, C10L 5/44, C10L 9/08

(54) **TREATMENT OF BIOMASS WITH VINASSE**

(71) Applicant: Nederlandse Organisatie voor toegepast- natuurwetenschappelijk Onderzoek TNO, 2595 DA Den Haag (NL)
(72) Inventor: The designation of the inventor has not yet been filed
(74) Representative: Nederlandsch Octrooibureau

(57) **Abstract**

The present invention concerns an improved process for the wet torrefaction (Torwash) of biomass, wherein the liquid phase comprises vinasse which is typically considered a waste stream. The process according the invention comprises: (a) heating a mixture comprising biomass and vinasse at a temperature in the range of 100 - 400 °C, to obtain torrefied biomass and a liquor; and (b) washing the torrefied biomass with water, to obtain a washed material and an effluent. The inventors found that by applying a washing step after the wet torrefaction, the results are equally good as when fresh water would be used in combination with a conventional pre-washing step.

## Description

### Field of the invention

The present invention relates to a process for the treatment of biomass with a treatment liquid comprising vinasse and optionally fluid residues from sugar mills, as well as the solid fuel obtained by said process.

### Background art

Torrefaction is a useful process for converting inexpensive low value biomass such as agricultural wastes and the like into high-grade fuels. In a torrefaction process, the biomass is heated to moderately high temperatures, typically 200 - 320 °C without added oxygen, resulting in removal of most of the residual water and a gentle breakdown of constituents of biomass producing a gas fraction, the so-called "tor-gas", comprising water vapour, carbon dioxide and small organic molecules, and a compactable solid product, which can be processed into a solid fuel, e.g. as a coal substitute

As an example, WO 2005/056723 describes a torrefaction process, in which biomass is torrefied at between 200 and 320°C, and the gas produced by the torrefaction is cooled so as to condense impurities and combustible material. NL 1029909 describes a pressurised torrefaction process, wherein the water remains in the liquid state during the heat treatment. This hydrothermal treatment leads to torrefaction of biomass and liberation of salts, which can be removed by mechanical means. However, if the hydrothermal treatment is performed in a single step with dewatering afterwards, the temperature must be relatively high in order to create the desired fuel characteristics, e.g. 190°C for grass or even 210°C for reeds and straw. At this temperature, watersoluble phenols and other undesired by-products are formed from decomposition. The pressed-out effluent then contains components that are not digestible and can even be toxic. EP2206688 describes a hydrothermal process for carbonising biomass at between 190 and 230°C and between 10 and 30 bar for 1-5 hours, followed by separation of the resulting solid and liquid by wet oxidation treatment of the liquid. The purpose of the heat treatment is chemical conversion of the biomass. WO 2010/112230 discloses a method for hydrothermally carbonising biomass involving a wet pressurised pretreatment at 90°C and subsequent carbonisation at e.g. 190-220°C and about 20 bar, followed by drying.

The applicant has developed a hydrothermal torrefaction treatment, termed Torwash™, as described in WO 2013/162355. With Torwash, the torrefaction of biomass with high salt content has become available, since salts are effectively removed during Torwash. Such biomass could not effectively be treated with conventional torrefaction methods. Torwash requires the use of fresh water, which is not always abundantly available, especially in those areas where biomass is abundantly available and Torwash would provide efficient valorisation of that biomass. One particular type of biomass that currently cannot readily be treated with regular torrefaction and would require excessive quantities of fresh water, but is available in large quantities is sugarcane residues, i.e. residues that remain after processing of sugarcane, mostly into ethanol or sugar. Such sugarcane residues are also referred to as sugarcane trash or sugarcane harvest residues (SHR). SHR typically includes the leaves and tops of a sugarcane plant, which become available when sugarcane are harvested and processed. Only the stems are used for sugar production. SHR is a by-product of sugar production and is currently a waste stream that is typically left behind on the sugarcane fields to decompose. Some SHR becomes available at the sugar mill when the stems are prepared to enter the sugar production process. Increasingly, the traditional practise to burn the leaves from sugarcane prior to harvest is outlawed, such that currently SHR is mostly left on the fields. This is unwanted because it accumulates on the soil, and harbours pests, both contributing to lower yields in harvest. This is avoided by removal of SHR together with the sugarcane stems from the fields. Either, the SHR is separated from the stems at harvest and collected in separate trucks, or whole plants are harvested and the leaves are separated from the stems as the first operation in the sugar mill. SHR is available in large quantities in countries like Brazil, India, China, Thailand, Pakistan, Mexico, Colombia, Indonesia, the Philippines and the United States of America. In the regions where sugarcane grows and is processed, fresh water is typically only limitedly available and subjecting SHR to Torwash as described in WO2013/162355 is not desirable. Furthermore, regular dry torrefaction of SHR provides inferior fuel, because of the high salt content, in particular the levels of chlorine and potassium. Dry torrefaction does not remove these from the feedstock. The presence of various elements, such as halogens (CI, Br, etc.), in the solid fuel gives rise to corrosive gases and aerosols which leads to corrosion issues of the furnace wherein the fuel is burned. Also, alkali metals (Na, K, etc.) are undesirable as they may form salts with low melting points, resulting in slagging and fouling as well as agglomeration of ashes and bed materials.

The present inventors have developed a process that greatly reduces the need of fresh water in a Torwash process. The invention thus provides in the need in the art of valorising biomass in those areas were fresh water is only limitedly available, but biomass is available in large quantities.

### Summary of the invention

The inventors surprisingly found that the Torwash process could efficiently be performed using the aqueous waste stream vinasse, instead of fresh water. High removal rates of potassium and chloride could be obtained, and the obtained solids met the requirements of fuel pellets both in terms of ash content and caloric value. Since vinasse, which is typically a waste stream, could be used, the usage of fresh water could be minimized, without jeopardizing the effectivity of the Torwash process. The inventors have developed a Torwash process wherein vinasse could be used in the liquid phase, by implementation of a post-wash step. Thus, the invention concerns a process for the treatment of biomass, comprising:
(a) heating a mixture of the biomass and treatment liquid comprising vinasse at a temperature in the range of 100 - 400 °C, to obtain torrefied biomass and a liquor; and
(b) washing the torrefied biomass with water, to obtain a washed material and an effluent.
The invention further concerns solid fuels obtainable by the process according to the invention. Herein the solid fuels correspond to the washed material or obtainable therefrom.

### Detailed description

The invention concerns a process for the treatment of biomass, comprising:
(a) heating a mixture of the biomass and treatment liquid comprising vinasse at a temperature in the range of 100 - 400 °C, to obtain torrefied biomass and a liquor; and
(b) washing the torrefied biomass with water, to obtain a washed material and an effluent.

In one embodiment, step (b) is performed directly after step (a), without substantial alteration of the torrefied biomass. The process can also be worded as being for the production of solid fuel, wherein the solid fuel is obtained as the washed material in step (b), optionally after the further processing steps as defined below. The process according to the invention affords suitable solid fuels, that can be co-fired into power plants without limitation. The requirements of chloride and potassium content for solids fuels are met, even though starting materials high in these components are used. The inventors have found that the solid fuels obtained in the process according to the invention can be more readily dehydrated by mechanical pressing and more readily pelletized then the products of conventional dry pyrolysis processes.

The invention further concerns a solid fuel, obtainable by the process according to the invention. The solid fuel according to the invention is preferably characterized as being derived from fibrous biomass, most preferably form sugarcane harvest residue (SHR). The solid fuel according to the invention is typically in the form of pellets.

Although any type of biomass feedstock could be used, in one embodiment the process is performed with biomass which benefits from Torwash over regular (dry) torrefaction, including biomass having a high salt content, such as a high potassium and/or chloride content. It is preferred that the effluent stream and the biomass are both residues from the same process. The benefits are largest if the biomass is fibrous in nature and requires substantial amounts of water for the removal of dissolution of salts. Preferred types of biomass in this respect are selected from grass, reeds, hay, straw, leaves, bamboo, sugar beet heads, moss, clippings, garden waste, residues from food industry (e.g. sugarcane harvest residues (SHR), empty fruit bunches (EFB), discarded fresh fruit bunches (FFB), coconut fibres, mesocarp, olive kernels, rice husk). In one embodiment, the process is performed with biomass that is mainly available in areas where fresh water is limitedly available. Suitable biomass includes EFB, coconut fibres, olive kernels, rice husk, palm fronds, SHR such as sugar cane leaves and tops, bagasse, and wood obtained from pruning or chopping trees. The process is particularly advantageous for fibrous biomass, as post-washing of torrefied biomass provides most optimal results. In an especially preferred embodiment, the biomass is fibrous biomass, preferably selected from SHR, bagasse, EFB, discarded FFB, mesocarp, coconut fibres, wood including hardwood and softwood, wood obtained from pruning or chopping trees. The use of residues from the sugar/ethanol production facilities, such as SHR and bagasse, are especially preferred. These biomass sources are perfectly compatible with the use of vinasse, as both are a waste product of sugar/ethanol production facilities. Of the solid residues of the production of sugar, SHR is of equal volume as bagasse, but it has the lowest value, and is perfectly compatible with vinasse in the process according to the invention. Thus, in one especially preferred embodiment, the biomass comprises or is SHR and/or bagasse, more preferably comprises or is SHR.

Thus, since vinasse and SHR are preferably used as starting materials of the process according to the invention, it is advantageously implemented at or near a sugar/ethanol production facility or is integrated therewith. Such a facility typically includes a sugar mill, strategically located within or near a sugarcane field, and an ethanol production unit. On the field, during harvest, the cane is typically separated from the SHR, such as leaves and tops. The canes are transported to the sugar mill, while the SHR is handled separately. In the context of the present invention, it would be transported to the location where the Torwash of step (a) take place. In the sugar mill, sugarcane is processed into a solid residue (bagasse) and molasses. In the ethanol production unit, the molasses are fermented to form ethanol, leaving vinasse as a waste product. Vinasse has found some application as fertilizer, because of its high potassium content. The remaining components in vinasse are not utilized in this application, as this can be considered wasted. The present invention utilizes the organic matter in vinasse, whereas the potassium is retrieved in the liquor and effluent of the present process, and if desired can still be used as fertilizer. The process according to the invention thus advantageously utilizes at least, and possibly three or four, of the main waste streams of a sugar/ethanol production facility. The treatment liquid may also include muddy juice, which is also a waste stream from the sugar/ethanol production facility, in particular from the clarification step in the sugar mill. Muddy juice is a liquid, rich in organic matter, which is typically washed and pressed into a muddy juice cake. By including muddy juice in the treatment liquid, the process according to the invention converts the organic matter in the muddy juice into solid fuels.

Prior to being subjected to step (a), the biomass may be pretreated. Such pretreatment may comprise removal of non-biomass such as sand, stones, plastic, etc., by sieving or otherwise, shredding, cutting, chopping and/or screening and the like. The pretreatment may comprises a mechanical pretreatment, which may involve breaking the cell structure of the biomass, into small particles of e.g. 0.1 - 10 cm diameter. The mechanical pretreatment preferably comprises chipping, milling, grinding, or extrusion, e.g. using choppers, stone mills, ball mills, extruders, or the like. In one embodiment, the process according to the invention does not comprise a pre-washing step as defined below, and as implemented in regular Torwash processes (see step (b) in WO 2013/162355).

### Step (a)

Step (a) of the process according to the invention is the regular Torwash step as known to the skilled person from e.g. WO 2013/162355. Torwash is a hydrothermal treatment that provides already for a large part the desired salt removal. Ash, in particular halogens and alkali metals need to be removed from solid fuels in order to avoid issues with corrosion, slagging, fouling and agglomeration. Of the relevant ions, potassium and chloride are most abundant in biomass, therefore the salts in biomass are well represented by but not limited to K and CI.

During step (a), a solid phase and a liquid phase are contacted. Step (a) may also be referred to as "torrefying" or "wet torrefying". A mixture thereof is treated at elevated temperature in order to obtain the torrefied material. The mixture may for example take the form of a suspension or solids submerged in the liquid. Best results have been obtained with submerging the biomass in the liquid phase, as that allows short treatment times at the lowest amount of liquid needed per amount of solid. The solid phase is formed by the biomass and includes any adherent liquid. The liquid phase is also referred herein as the treatment liquid and comprises vinasse.

The treatment liquid comprises vinasse. In one embodiment, the treatment liquid comprises at least 50 wt% vinasse, preferably at least 80 wt% vinasse, more preferably at least 90 wt% or even at least 95 wt% vinasse. In one embodiment, the treatment liquid is (i.e. consists of) vinasse. The minimal level of vinasse is not crucial, as one of the goals of the present invention is to provide a useful and valuable use for vinasse, it could happen that vinasse supplies at some point are scarce for some reason (e.g. the ethanol production unit is malfunctioning), in which case vinasse could (partly) be replaced by another source of water, such as fresh water, rainwater, muddy juice or process water, also used for imbibition in the sugar mill, or other aqueous liquids. In an especially preferred embodiment, muddy juice is included in the treatment liquid, as that increases the total organic content that is converted into a solid fuel, but also makes valuable use of another waste stream of a sugar/ethanol production facility. The liquid phase may also contain a liquid process stream, such as the effluent of step (a) (the liquor) or step (b), or an effluent of a digestion step of the effluent of step (a) or step (b). In one embodiment, the liquid phase consists of vinasse, optionally supplemented with muddy juice, water and/or a process stream as defined above. The use of muddy juice, water or any of these process streams as partial replacement of vinasse does not negatively affect the process according to the invention.

The liquid to solid (L/S) ratio in the mixture that is subjected to step (a) is preferably in the range of 2 - 25, more preferably 4 - 10, even more preferably 5 - 8, most preferably 6 - 7. These L/S ratios takes into account the solids present in the liquid phase (they are classified as solids) as well as the liquid in the solid phase (classified as liquids). Excellent results have been obtained with L/S ratios in the range of 6 - 7, preferably where the solids are just submerged.

Vinasse is well-known in the art, and is produced in large quantities as by-product of ethanol and sugar production. In particular, vinasse refers to any aqueous effluent stream that is discharged from the process that converts molasses to ethanol by fermentation followed by distillation. Vinasse is the fluid that remains as bottom product in the distillation step where ethanol is removed. The vinasse that typically has a total solids content of about 5-10 % (w/v) may optionally be concentrated to a certain extent, preferably to a total solid content of at most 15 wt%. As vinasse forms the liquid phase in step (a), a pre-drying step of the vinasse is not required, nor desired. The vinasse suitable for use in the present invention typically has a total solids content of 20000 - 150000, preferably 30000 - 100000 mg/L and/or a suspended solids content of 5000 - 100000 mg/L, preferably 15000 - 40000 mg/L. Additionally, the Biological Oxygen Demand (BOD) is typically 0 - 100000 mg/L, preferably 10000 - 40000 mg/L; and/or the Chemical Oxygen Demand (COD) is typically 0 - 200000 mg/L, preferably 30000 - 1000000 mg/L. Further, the vinasse may have a total nitrogen content of 200 - 2000 mg/L, preferably 400 - 1000 mg/L; a carbohydrate content of 0 - 50000 mg/L, preferably 5000 - 20000 mg/L, and/or a protein content of 0 - 75000 mg/L, preferably 10000 - 25000 mg/L. The ash in vinasse typically includes one or more, preferably all of P, K, Mg, Ca, Fe and CI. Typically, vinasse has a phosphorus content of 50 - 1000 mg/L, preferably 100 - 400 mg/L, a potassium content of 300 - 10000 mg/L, preferably 1000 - 6000 mg/L; a magnesium content of 100 - 2000 mg/L, preferably 350 - 1000; a calcium content of 50 - 2000 mg/L, preferably 150 - 1500 mg/L; an iron content of 10 - 500 mg/L, preferably 25 - 200 mg/L; and/or a chlorine content of 100 - 8000 mg/L, preferably 500 - 5000 mg/L. In a preferred embodiment, all of the above contents apply to the vinasse used in the present invention.

Current processing of vinasse includes concentration, drying and granulation. Since vinasse is rich in potassium, it is typically used as fertilizer, both as a liquid, a concentrated syrup and after drying as a granulate. The organic fraction of vinasse is not contributing to its value as fertilizer. In the process according to the invention, the organic fraction is converted into a solid fuel, and partly into biogas. The present invention provides an improved sustainable use of vinasse. vinasse contains dissolved and suspended organic material as well as dissolved salts (mainly K). The typical total solid content (suspended and dissolved) is 5 wt%. An advantage of the use of vinasse in the production of solid fuels from biomass is that the organic matter contained therein increases the yield of the solid fuel obtained by the process according to the invention. The inventors found that about 20 wt% of the dissolved and suspended material, deposits on the SHR during step (a) and contributes to a higher solid fuel yield. The other 80% of the solids, including the salts, remain dissolved or suspended and end up in the liquor. These solids may be converted into biogas in an optional digestion step as defined below.

The present inventors surprisingly found that using vinasse as liquid phase of a Torwash step did not interfere with the removal of ions such as potassium and chloride from the biomass. Even though these ions are contained in vinasse in substantial amounts, the obtained solid fuels are depleted in these ions, compared to the incoming biomass, just as they would be if fresh water would be used. In fact, any remaining K and CI ions in the solid obtained in step (a) are contained in the liquid remaining within the solid matrix after draining, and is thus easily removed in step (b). As such, corrosion of the furnace when burning the solid fuels obtained by the process according to the present invention and other issues are not at hand.

The temperature at which the contacting of step (a) is performed is preferably in the range of 100 - 400 °C, preferably in the range of 140 - 320 °C, more preferably in the range of 160 - 250 °C, most preferably in the range of 170 - 230 °C. The inventors found that the optimal temperature for the combination vinasse and SHR is about 200 °C. Step (a) is typically performed at elevated pressure in order to keep the liquid phase liquid. A typical pressure is slightly above the steam pressure of the operational temperature, and typically is in the range of 4 - 50 bar, preferably 12 - 25 bar. The duration of step (a) is typically in the range of 5 min - 5 h, preferably 10 min - 2 h, more preferably 15 min - 1 h.

Step (a) provides a liquid phase, referred to as liquor or torrefaction liquor, and a solid phase, referred to as torrefied biomass or torrefied material. The torrefied material is fed to step (b), while the liquor is discarded as waste or used as deemed fit. A possible application of the liquor is the production of biogas via digestion. For this application, it may first be combined with the effluent obtained in step (b) and together subjected to digestion, typically anaerobic digestion. The thus obtained biogas can advantageously be used to fuel the sugar and ethanol production plant, e.g. for generation of steam. As such, a further increase in cost efficacy and renewability of the entire process as well as the sugar and ethanol production process is achieved. Alternatively, the liquor may be used to obtain bio-based chemicals and products. As a further alternative, the liquor may be used in the same way as vinasse is used, notably as liquid potassium fertilizer or after removal of the water as granulated potassium fertilizer.

As the skilled person will understand, separation of the liquid and the solid phase is part of step (a). Such separation (or dewatering) can be accomplished in any manner known in the art, such as centrifugation, filtration, draining, decantation and/or mechanically dewatering. Such separation of liquid and solid products may be enhanced, for example by pressing, squeezing or centrifuging the solid material using a porous mould to force out any remaining liquids inside the solid material. Typically, draining, optionally in combination with a centrifuge, is used. After separation, the moisture content of the solid obtained in step (a) is typically in the range 50 - 90 %, such as 65 - 80 %, and could be lowered with about 50 % using such enhancement of the dewatering. However, forced dewatering to moisture contents below 40 % is often undesired, since it compacts the material too much so that step (b) becomes inefficient. As such, significant amounts of undesired ions are already removed by the enhanced dewatering, such that step (b) requires less water to obtain solid fuel with sufficiently low content of such ions.

Step (a) typically also affords a gaseous product, which contains degradation products of the organic matter present in the biomass and possible the vinasse. The gaseous product mostly contains H₂O, and further often CO₂, and possibly one or more of CO, H₂, methane, methanol, formic acid and acetic acid. This gaseous product can be used as deemed fit, e.g. in the production of biogas (bio-SNG). In one embodiment, the gaseous product of step (a) is subjected to condensation of at least the water present therein. The condensation product is a salt-free liquid that can be used as a source of water in step (a) of the process according to the invention.

### Step (b)

In step (b), the torrefied solid product originating from step (a) is washed, also referred to as "post-washing". In conventional torrefaction and Torwash processes, the biomass is washed prior to be subjected to the torrefaction step (i.e. "pre-washing"), to remove as much as possible ions and other extractives from the biomass. The presence of ions such as chlorine and potassium in the final solid fuel causes undesirable slagging, fouling, agglomeration and corrosion of the furnace. To avoid such issues, these ions need to be removed from the biomass. However, as vinasse contains many salts including chlorine, potassium and sodium, removing ions before the Torwash step was found to be of little use, because they will be reintroduced with the vinasse. Thus, in one embodiment, the process according to the invention does not comprise a pre-wash step, or in other words the biomass that is subjected to step (a) is not washed with fresh water prior to step (a). The inventors found that a post-washing step, wherein the torrefied biomass is washed, gave optimal results when vinasse was used as the liquid phase in the Torwash step. The inventors further found that a larger fraction of the undesired elements present in the biomass could be removed by a post-washing step, compared to a pre-washing step. Without being bound to a theory, it is believed that before the thermal treatment of step (a), part of CI, K and other undesired ions is bound to or embedded in the structural matrix of the biomass, and cannot be washed out, whereas thermal treatment in step (a) liberates these ions, such that substantially all CI and K dissolvable and can be washed out. However, post-washing may not available for dry torrefied biomass, or biomass that has been subjected to Torwash, because the obtained solids may be brittle and break easily, such that post-washing may lead to breaking or pulverization of the torrefied biomass. As post-washing typically employs filters for retaining the solids and permeating the liquid, small pieces that break off the solids may pass these filters and contaminate the liquid stream or cause clogging of the filters. Notwithstanding these downsides of post-washing, the inventors have successfully performed a post-wash step on torrefied SHR, which because of its tough, sturdy nature did not lead to breaking of the torrefied material. Filtering of the washed solids does not lead to significant breaking of the solids, such that contamination of the liquid stream with tine fragments of solids and clogging of the filters is not observed. Furthermore, because of the high fibre content of SHR, even after Torwash the torrefied solids retain an open structure, such that the washing liquid has optimal contact with the solids and ions are effectively removed and at the same time the structure of the torrefied material is not significantly jeopardized, such that they can still be handled as regular torrefaction produced solid fuels. For that reason, it is preferred that the biomass subjected to step (a) of the process according to the invention is woody or fibrous biomass, as defined above.

The washing of step (b) preferably takes place in counter-current mode, which may be continuous or in stages. For process efficiency, continuous counter-current washing is preferred. Counter-current washing is preferred, since it minimizes the amount of water needed. The amount of washing liquid is preferably kept at a minimum, and the inventors found that when using counter-current washing less than 1 L washing liquid per 2 kg torrefied material (wet weight, equals about 1 kg dry weight) sufficed for optimal removal of undesired ions. Using such low amount of washing liquid, the chloride content could be reduced from 3000 mg/kg in the torrefied material to only 200 mg/kg in the post-washed material (both on dry weight). Thus, in one embodiment, 0.1 - 10 L, preferably 0.2 - 5 L, more preferably 0.3 - 2 L washing liquid per kg torrefied material is used. Based on 1 kg of the incoming biomass, the amount of washing liquid used in step (b) preferably amounts to 0.05 - 5 L, more preferably 0.1 - 2 L, most preferably 0.3 - 1 L. Compared to conventional Torwash using fresh water in a prewash and a downstream Torwash step, the amount of fresh water could be reduced 10-fold.

In step (b), water is used to remove the bulk of the remaining ions from the torrefied material obtained in step (a). The washing liquid comprises water or preferably is water. The washing liquid used in step (b) should thus be substantially free from the ions that are the objective of the removal, such as potassium and chloride. Thus, in one embodiment, the water used in step (b) is substantially free from ions of alkali metals (Li, Na, K, etc.) and ions of halogenides, (CI, Br, etc.). In a preferred embodiment, fresh water is used as washing liquid, such as rainwater, surface water, tap water or water that was obtained from the crystallisation steps in a sugar mill. The content of alkali metal ions and halogenides is sufficiently low in these water source that it can be used in step (b) without problems. Preferably, the content of each of these ions individually is kept below 150 mg/L, most preferably below 90 mg/L. Notably, the relative small amount of washing liquid is the only fresh water that is required in the process according to the invention, which is thus perfectly suitable to be performed in areas were fresh water is scarce. In fact, the amount of biomass that can be depleted from ions with this little amount of fresh water is unprecedented in the art.

The washing of step (b) is typically performed at ambient temperature and pressure. The temperature may be in the range of 10 - 50 °C, preferably 20 - 40 °C. The pressure may be in the range of 0.8 - 10 bar, preferably 1 - 1.5 bar.

The washing of step (b) affords a solid product, referred to as the "washed material" or "solid fuel", and a liquid effluent. The washed material is, after optional further processing as defined below, the main product of the process according to the invention, while the effluent is discarded as waste or used as deemed fit. A preferred application of the effluent is the production of biogas via digestion. For this application, it may first be combined with the liquor obtained in step (a) and together subjected to digestion, typically anaerobic digestion. The thus obtained biogas can advantageously be used to fuel the sugar and ethanol production plant, e.g. for generation of steam. As such, a further increase in cost efficacy and renewability of the entire process as well as the sugar / ethanol production process is achieved.

As the skilled person will understand, separation of the effluent and the washed material is part of step (b). Such separation (or dewatering) can be accomplished in any manner known in the art, such as centrifugation, filtration, draining, decantation and/or mechanically dewatering. Such separation of liquid and solid products may be enhanced, for example by pressing, squeezing or centrifuging the solid material using a porous mould to force out any remaining liquids captured within the solid material. The dewatering may thus afford two liquid streams, a first liquid stream obtained when the solids and the liquids are separated and a second liquid stream obtained after enhancement of the separation. Part of the obtained effluent, especially the second liquid stream, may be recycled to the washing step, to supplement the washing liquid. Typically, after separation, the moisture content of the solid material is in the range 30 - 90 %, such as 50 - 70 % when low-energy consuming dewatering is used. The moisture level could be lowered to 20 - 60 %, typically 30 - 40 %, by using enhanced (mechanical) dewatering. This will simultaneously compact the product. As such, substantially all of the remaining dissolved ions, notably potassium and chloride, are removed together with the water. Since no further washing is required, such dense and compact fuel solids (e.g. pellets) are preferred for their high energy density and ease of transportation.

### Further steps

The washed material obtained from step (b) is advantageously further processed into solid fuels. Such further processing may include drying, milling and pelletization. Depending on the total moisture content of the obtained washed material, further drying may be beneficial. Pelletization of the obtained solids, which may include milling, affords fuel pellets which are easy to store and transport. Drying and pelletizing the washed solids in the context of a Torwash process is well-known in the art.

### Example

In this simulated experiment, shredded and dried SHR and vinasse were treated according to the invention. The dried SHR had a moisture content of 8.3 wt% (as received), an ash content of 9.4 wt% (dry base), a CI content of 1517 mg/kg (dry base) and a K content of 5780 mg/kg (dry base). The vinasse had a moisture content of 91.2 wt% (as received), an ash content of 23 wt% (dry basis), a CI content of 780 mg/kg (as received) and a K content of 2155 mg/kg (as received). A mixture of vinasse and SHR was prepared in a 20L autoclave, composed of 1.4 kilogram dried SHR, and 11.2 litre vinasse. The mixture was treated at 190 °C for 30 minutes. After cooling of the autoclave, the content of the reactor was removed and drained on a filter, affording 7.8 litre of drained fluid (referred to as the Torwash liquor). 4.3 kilogram of drained torrefied SHR was recovered, having a moisture content of 75 % w/w. This material was used subjected to a post-washing test.

The entire filtercake of about 4.3 kilogram of the thus obtained torrefied SHR was washed three times in different washing fluids at 50 °C. These washing fluids served as model for the composition of the three washing fluids in a 3-staged counter-current washer. The first two were prepared by mixing Torwash liquor with water and the third stage was composed of clean demineralized water. The amount of washing liquid that was used followed from a calculation of washing in three stages where a minimal amount of fresh water was used. In the last stage, about 1.7 kg of fresh water was used. Samples of the material that were washed according to this procedure were pressed with 65 bar mechanical press to establish the effect of mechanical dewatering. The thus obtained press cakes had a moisture content of 37 % w/w. The results of both the Torwash step and the post-washing step are very similar to those obtained in experiments using SHR and pre-washing with fresh water.

The mass balance of this process, based on 1 ton dried sugarcane harvest residue, was calculated as given in Table 1.

**Table 1: Mass balance, based on 1 ton SHR**

| | Total weight (kg) | Liquid (kg) | Solid (kg) |
|---|---|---|---|
| SHR (in) | 1000 | 927 | 73 |
| vinasse (in) | 8000 | 7296 | 704 |
| Torrefied/drained SHR (intermediate) | 3063 | 2295 | 769 |
| Liquor (out) | 5570 | | |
| Washed/pressed material (out) | 1190 | 440 | 750 |
| Fresh water (in) | 1225 | | |
| Effluent (out) | 3099 | | |

About 46 % of the inputted solids are recovered as output solids in the press cake. Samples of feedstocks (SHR and vinasse), intermediate products, liquid effluents and the solid press cake were analysed for chlorine (CI) and potassium (K) content. The results are reported in Table 2 below.

**Table 2: Composition of starting materials SHR and vinasse and product streams**

| | Vinasse [1] | TOWASH Liquor [1] | Wash Effluent [1,2] | SHR [3] | Drained, torwashed SHR [3,4] | Pressed product [3,5] |
|---|---|---|---|---|---|---|
| Ash(550) (wt%) | | | | 9.4 | 13.9 | 11.7 |
| CI (mg/kg) | 780 | 970 | 671 | 1517 | 2897 | 199 |
| K (mg/kg) | 2155 | 2869 | 1985 | 5780 | 8561 | 572 |

| | | | | | | |
|---|---|---|---|---|---|---|
| [1] based on total liquid (as received/obtained); [2] washing effluent; [3] based on total dry weight; [4] pressed disk from the drained torrefied material; [5] pressed disk from the post-washed material. | | | | | | |

The obtained washed material have a HHV of 20.6 MJ/kg and an ash content of 11.7 wt%, mainly silicates. This material is a viable fuel, suitable to replace coal in power plants. For both chloride and potassium, 71% of the total input in vinasse plus SHR ends up in the liquor drained from the slurry after the hydrothermal treatment, while only about 2 wt% of the introduced amount ends up in the washed material. A removal rate of 98 % for both chloride and potassium was thus achieved. The element contents given in Table 2 is conventional for a Torwash process and resembles those using a pre-wash step and fresh water as liquid phase during the Torwash step. The distribution over the solid product and the liquid streams (liquor + effluent) is mainly governed by the solubility of the ion in water. K and CI Na dissolve easily and are washed out to a high extent, whereas most other ash forming elements (e.g. Si and Al) largely remain in the solid product. These results are in line with regular prewash + Torwash using fresh water instead of vinasse. The low pH of vinasse of about 3 - 4, i.e. markedly lower then fresk water as used in conventional Torwash, had no negative influence on the Torwash process.

In conclusion, these results show that a Torwash process using SHR and vinasse is efficiently performed, with high removal rates for potassium and chloride. The obtained solids meet the requirements of fuel pellets both in terms of ash content and caloric value. Fresh water can thus readily be replaced by vinasse in the thermal step of a Torwash process, by implementation of a post-washing step, thus minimizing fresh water usage.

## Claims

1. A process for the treatment of biomass, comprising:
(a) heating a mixture of the biomass and a treatment liquid comprising vinasse at a temperature in the range of 100 - 400 °C, to obtain torrefied biomass and a liquor; and
(b) washing the torrefied biomass with water, to obtain a washed material and an effluent.

2. The process according to embodiment 1, wherein the biomass is fibrous biomass, preferably selected from sugarcane harvest residues (SHR), empty fruit bunches (EFB), discarded fresh fruit bunches (FFB), mesocarp, coconut fibres, fruit peels, wood including hardwood and softwood and wood obtained from pruning or chopping trees.

3. The process according to any one of the preceding embodiments, wherein the liquid to solid (L/S) ratio in the mixture that is subjected to step (a) is in the range of 2 - 25, preferably in the range of 6 - 7.

4. The process according to any one of the preceding embodiments, wherein the treatment liquid further comprises another source of water selected from fresh water, rainwater, muddy juice and process water obtained as liquor from step (a) and/or effluent from step (b).

5. The process according to any one of the preceding embodiments, wherein the water used in step (b) is substantially free from potassium, sodium and chloride.

6. The process according to any one of the preceding embodiments, wherein the washing of step (b) occurs in counter-current mode.

7. The process according to any one of the preceding embodiments, wherein the amount of water used in step (b) amounts to 0.05 - 5 L per 1 kg of the biomass that is subjected to step (a).

8. The process according to any of the preceding embodiments, further comprising processing of the washed material into solid fuel pellets, preferably by one or more of drying and pelletizing.

9. The process according to any one of the preceding embodiments, wherein the liquor obtained in step (a), the effluent obtained in step (b) or a mixture thereof is subjected to anaerobic digestion to obtain biogas.

10. The process according to any one of the preceding embodiments, wherein the process is integrated with a production facility for sugar and/or ethanol.

11. Solid biomass-derived fuel, obtainable by the process according to any one of the preceding embodiments.

12. Solid fuel according to embodiment 11, which is derived from fibrous biomass, preferably from SHR.
